# EUROPEAN PATENT APPLICATION

(11) **EP 1 609 371 A1**
(43) Date of publication of application: **28.12.2005**
(21) Application number: 05013250.5
(22) Date of filing: 20.06.2005
(51) Int. Cl.: A23G 1/20, A23G 3/02

(54) **Molding device for a hollow , chocolate-based food product, or similar foodstuff**

(30) Priority: 21.06.2004 IT UD20040128
(71) Applicant: SWEET SpA, 34170 GORIZIA (IT)
(72) Inventor: Bonera, Andrea, 33100 Udine (IT); Miakar, Fabio, 34170 Gorizia (IT); Bolzan, Stefano, 34076 Romans D'Isonzo (GO) (IT)
(74) Representative: Petraz, Gilberto Luigi

(57) **Abstract**

Molding device (10) for a hollow, chocolate-based food product, comprising a mold (11) consisting of a female part, or matrix (12), able to cooperate with a corresponding male part, or punch (13) in order to define a cavity (23) able to contain the product in its tempered state. The punch (13) is thermally associated with a cooling unit (14) to cool the product. The cooling unit (14) comprises a heat dissipation member (20, 21) and at least a thermoelectric cell (15), which absorbs heat from the punch (13) in order to yield it to the heat dissipation member (20, 21).

## Description

### FIELD OF THE INVENTION

The present invention concerns a molding device to obtain a hollow, chocolate-based food product, or similar foodstuff, starting from the product in the tempered state. The molding device according to the invention comprises a mold able to give the product a desired shape, and a cooling unit able to cool the product in its tempered state in order to obtain the solid product.

### BACKGROUND OF THE INVENTION

To process chocolate-based products, or similar foodstuffs, a step is provided to temper the product to make it workable, and a molding step to give the final product the desired shape by means of a molding device.

Conventional molding devices comprise a mold consisting of a female part, or matrix, and a male part, or punch, which define a molding cavity, here and hereafter also called cavity, able to contain and give the desired shape to the product. Conventional molding devices also comprise a cooling unit, normally associated with the punch, and able to cool the latter and consequently the product present in the cavity during the molding step.

Conventional cooling units comprise one or more plates made of metal, or other heat conducting material, disposed in contact with the punch so as to dissipate its heat, and a plurality of pipes, made both inside the punch and extending in proximity of said cavity, and also in the plate. A cooling fluid flows at high pressure in the pipes, and is able to absorb heat from the punch and consequently to cool it. To obtain the solid product and prevent the product sticking to the punch, it is necessary to keep the punch at a temperature comprised between about -15 and -5°C. Consequently, the cooling fluid is normally kept at temperatures comprised between about -25 and -15°C, and even less.

The cooling fluid is usually glycol and the cooling units are normally large, which entails a high energy consumption.

Moreover, for the circulation of the cooling fluid a high level of heat insulation of the pipes is required, so as to prevent thermal dispersion.

Another disadvantage is that, with conventional cooling systems, the cooling zone is not localized in the punch alone, but also affects the plate. This situation entails the consumption of a high quantity of cooling fluid, further increasing the energy consumption of the cooling unit.

Another disadvantage, caused by the fact that cooling is not localized, is that the entire plate is subject to heat contraction, due to the low temperatures to which it is subjected.

Another disadvantage is that the high pressure of the cooling fluid in the pipes inside the plate, connected to the need to achieve high speeds and high coefficients of heat exchange of the cooling fluid, can entail structural deformations of the plate.

Given that the pipes for the cooling fluid are made in the punch, another disadvantage is that conventional punches cannot be easily removed for maintenance and/or to change the shape of the final product.

One purpose of the present invention is to achieve a molding device in which the cooling action is localized substantially in the punch.

Another purpose of the present invention is to achieve a molding device which uses a cooling fluid at higher temperatures, above 0°, and lower pressures than those of conventional molding devices, so as to reduce energy consumption and prevent the problems of heat contractions and structural deformations.

Another purpose of the present invention is to achieve a molding device in which it is easy to replace the punch for maintenance and/or to change the shape of the product.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purposes, a molding device for a hollow chocolate-based food product according to the present invention comprises a mold consisting of a female part, or matrix, able to cooperate with a corresponding male part, or punch, in order to define a cavity able to contain and give the desired shape to the product in the tempered state. The punch is thermally associated with cooling means able to cool the product.

According to a characteristic of the present invention, the cooling means comprise a heat dissipation member and at least a thermoelectric cell, otherwise called a Peltier cell, which is able to absorb heat from the punch and to yield it to the heat dissipation member.

In this way, the cooling achieved by the cooling means according to the present invention is localized substantially in the punch alone, thanks to the use of the thermoelectric cell. In fact, the latter achieves, inside the punch, an action comparable to a "heat pump", that is, achieving an active transport of heat from the punch to the heat dissipation member, thus saving electric energy.

The thermoelectric cell has a first part, or cold side, in at least close proximity with the punch, and a second part, or hot side, in at least close proximity with the heat dissipation member.

A possible variant of the invention is that in which several thermoelectric cells cool the same punch, for example for large size products, such as Easter eggs.

The heat dissipation member comprises at least a cooling plate able to dissipate the heat and a plurality of pipes in which a cooling fluid is able to flow, to absorb heat from the hot side of the thermoelectric cell.

In this way, the cooling fluid is able to absorb heat from the hot side of the thermoelectric cell, and not directly from the punch, as happens in conventional molding devices.

Thanks to the fact that cooling is localized substantially in the punch, or in any case in the element of the mold, the phenomena of heat contraction and structural deformations typical of conventional molding devices do not occur.

For the same reason, it is possible to use cooling fluids with higher temperatures, for example simple water with glycol, and with lower pressures compared with conventional molding devices.

Moreover, thanks to the fact that said pipes are not made or inserted inside the relative punches, the latter can very easily be removed and replaced.

Thanks to the present invention, in order to keep the punch at a working temperature comprised between about -15 and -5°C, it is enough to keep the cooling fluid at a temperature comprised between about 5° and 10°C and the cooling plate at about 10°C, thus achieving all the advantages and benefits indicated above.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral section of a molding device made according to the present invention;
- fig. 2 is a view from below of part of the device in fig. 1.

### DETAILED DESCRIPTION OF A PREFERENTIAL FORM OF EMBODIMENT

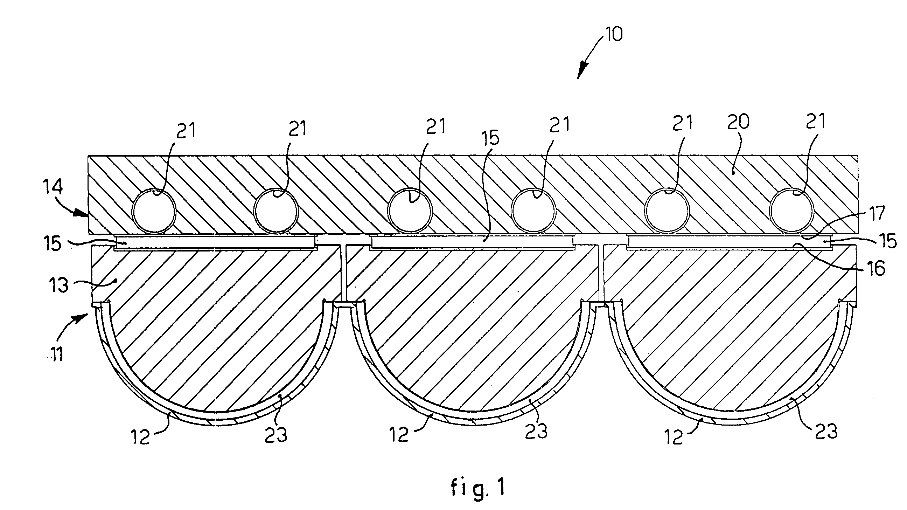

With reference to fig. 1, a molding device 10 for a hollow chocolate-based food product according to the present invention comprises a mold 11, usually made of plastic material, and a plurality of punches 13 connected to a cooling unit 14.

The mold 11 constitutes a matrix 12, on which a plurality of cavities 23 are defined, each able to cooperate with a corresponding punch 13, and able to contain the product in the tempered state.

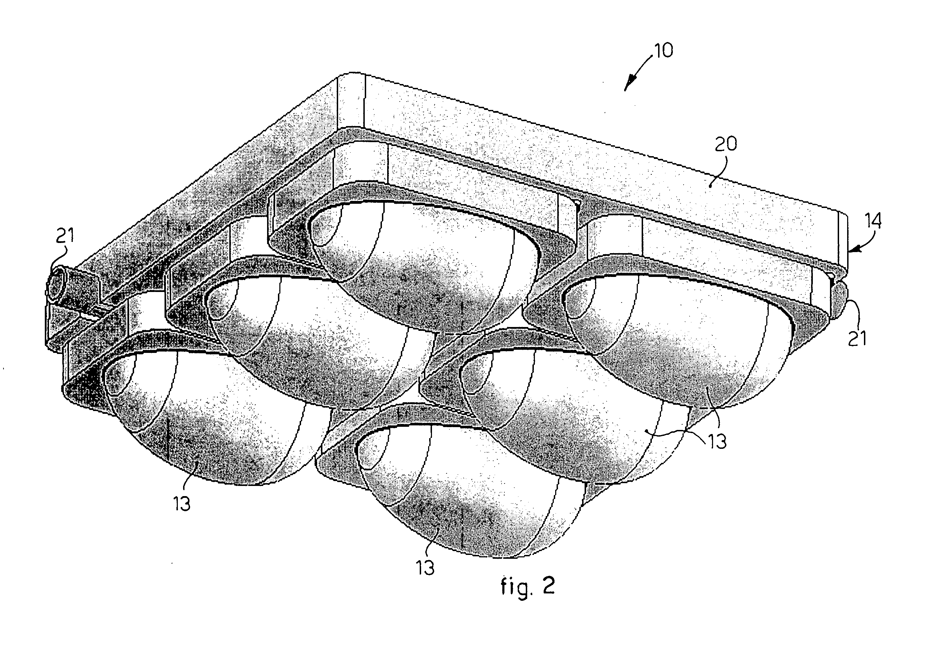

In this case and only to give an example, the molding device 10 (fig. 2) comprises six punches 13, each of which is associated with a relative cavity 23 of the mold 11. The punches 13 are disposed in two rows of three.

The mold 11 (fig. 1) is made of plastic material; the cavities 23 are concave in shape mating with the shape of the punch 13.

The punch 13 is made of heat conducting material, for example metal, in this case aluminium or copper, and is thermally connected to the cooling unit 14.

The cooling unit 14 comprises a cooling plate 20, for example made of metal, inside which pipes 21 are made, in which a cooling fluid flows, for example a liquid such as water.

For every punch 13, the cooling unit 14 comprises a thermoelectric cell 15, or Peltier cell, fed by means of an electric feeder in direct current. The thermoelectric cell 15 defines a cold side 16, located thermally in contact with the respective punch 13, and a hot side 17 located thermally in contact with the cooling plate 20 and with the pipes 21.

The cold side 16 is able to absorb heat from the punch 13. The hot side 17 is able to yield said heat to the cooling plate 14 and hence to the cooling fluid.

In this way the cooling zone is localized substantially in the punch 13, and the cooling fluid is able to absorb heat from the hot side 17 of the thermoelectric cell 15 and not from the punch 13 itself, as happens in conventional devices, since the thermoelectric cell 15 achieves a heat pump.

According to the invention, maintaining the cooling fluid at a temperature comprised between about 5 and 10°C, the temperature in each punch 13 is comprised between about -15 and -5°C, that is, at the desired temperatures required by the cold molding process of the chocolate, and the temperature of the cooling plate 20 is about 10°C.

The molding device 10 achieved according to the invention does not need complex cooling plants with glycol (with temperatures below 0°C) but, to keep the cooling fluid inside said temperatures, it is enough for example to have a simple water cooler. In this way we considerably reduce both the complexity of the cooling plant, and the electric consumption to cool the cooling fluid, and also the heat losses due to the transport of the cooling fluid.

It is clear that modifications and/or additions of parts may be made to the molding device 10 as described heretofore, without departing from the field and scope of the present invention.

According to a variant, two or more thermoelectric cells are associated with every punch 13.

According to another variant, a thermoelectric cell is associated with two or more punches 13.

It is also clear that, although the present invention has been described with reference to some specific examples, a person of skill in the art shall certainly be able to achieve many other equivalent forms of molding device for a hollow chocolate-based food product, or similar foodstuff, having the characteristics as set forth in the claims and hence all coming within the field of protection defined thereby.

## Claims

1. Molding device for a hollow, chocolate-based food product, comprising a mold (11) consisting of a female part, or matrix (12), able to cooperate with a corresponding male part, or punch (13) in order to define a cavity (23) able to contain said product in its tempered state, said punch (13) being thermally associated with cooling means (14) to cool said product, **characterized in that** said cooling means (14) comprise a heat dissipation member (20, 21) and at least a thermoelectric cell (15), which is able to absorb heat from said punch (13) and to yield it to said heat dissipation member (20, 21).

2. Device as in claim 1, **characterized in that** said thermoelectric cell (15) has a first part (16) in at least close proximity with said punch (13) ad a second part (17) in at least close proximity with said heat dissipation member (20, 21).

3. Device as in claim 1 or 2, **characterized in that** said heat dissipation member comprises at least a cooling plate (20) able to dissipate heat, and a plurality of pipes (21) in which a cooling fluid is able to flow.

4. Device as in claim 2 or 3, **characterized in that** said first part (16) is able to absorb heat from said punch (13), and said second part (17) is able to yield said heat to said heat dissipation member (20, 21).

5. Device as in claim 3 or 4, **characterized in that** said cooling fluid is substantially water, water with glycol or similar liquid.

6. Device as in any claim hereinbefore, **characterized in that** said thermoelectric cell (15) and said heat dissipation member (20, 21) are configured to keep the temperature of said punch (13) substantially between about -15 and -5°C.

7. Device as in any claim from 3 to 6, **characterized in that** said cooling fluid is made to circulate at a temperature comprised substantially between about 5 and 10°C in order to keep said cooling plate (20) at a temperature of about 10°C.

8. Device as in any claim hereinbefore, **characterized in that** said thermoelectric cell (15) is fed by means of a direct electric current.
